(19) **Europäisches Patentamt / European Patent Office / Office européen des brevets**

(11) **EP 4 607 783 A1**

(12) **EUROPÄISCHE PATENTANMELDUNG**

(43) Veröffentlichungstag:
27.08.2025   Patentblatt 2025/35

(21) Anmeldenummer: 24158843.3

(22) Anmeldetag: 21.02.2024

(51) Internationale Patentklassifikation (IPC):
$H02M\ 7/483^{(2007.01)}$    $H02M\ 1/32^{(2007.01)}$
$H02M\ 1/00^{(2006.01)}$    $H02M\ 7/757^{(2006.01)}$
$H02H\ 9/04^{(2006.01)}$    $H02P\ 3/22^{(2006.01)}$

(52) Gemeinsame Patentklassifikation (CPC):
H02M 1/322; H02H 9/041; H02M 1/0095;
H02M 7/4835; H02M 7/7575; H02P 3/22

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Innomotics GmbH**
**90441 Nürnberg (DE)**

(72) Erfinder: **Hofmann, Viktor**
**95448 Bayreuth (DE)**

(74) Vertreter: **Siemens Patent Attorneys**
**Postfach 22 16 34**
**80506 München (DE)**

(54) **AUFBAU UND BETRIEBSVERFAHREN EINES MODULAREN BREMSSTELLERS**

(57)   Die Erfindung betrifft einen modularer Bremssteller (1), wobei der modulare Bremssteller (1) mindestens ein Submodul (2) und einen Bremswiderstand (3) umfasst, wobei das mindestens eine Submodul (2) und der Bremswiderstand (3) in einer Reihenschaltung (14) angeordnet sind. Zur Verbesserung des modularen Bremsstellers wird vorgeschlagen, dass der Widerstandswert ($R_B$) des Bremswiderstands (3) durch eine Steuervorrichtung (4) veränderbar ist. Ferner betrifft die Erfindung eine modulare Antriebseinheit (10), aufweisend einen modularen Multilevel-Stromrichter (11) und einen derartigen modularen Bremssteller (1), wobei der Multilevel-Stromrichter (11) gleichspannungsseitig mit dem modularen Bremssteller (1) verbunden ist. Die Erfindung betrifft weiter ein Verfahren zum Betreiben eines derartigen modularen Bremsstellers (1) oder einer derartigen modularen Antriebseinheit (10), wobei in Abhängigkeit von der in Wärme umzusetzenden Leistung ($P_{ss}$) die Steuervorrichtung (4) den Widerstandswert ($R_B$) des modularen Bremsstellers (1) verändert.

FIG 5

EP 4 607 783 A1

**Beschreibung**

Die Erfindung betrifft einen modularer Bremssteller, wobei der modulare Bremssteller mindestens ein Submodul und einen Bremswiderstand umfasst, wobei das mindestens eine Submodul und der Bremswiderstand in einer Reihenschaltung angeordnet sind. Ferner betrifft die Erfindung eine modulare Antriebseinheit aufweisend einen modularen Multilevel-Stromrichter und einen derartigen modularen Bremssteller. Weiter betrifft die Erfindung ein Verfahren zum Betreiben eines derartigen modularen Bremsstellers oder einer derartigen Antriebseinheit.

Der modulare Multilevel-Stromrichter ist aus der DE 10 103 031 A1 bekannt. Dieser, auch als M2C oder MMC bekannte Stromrichter, besitzt eine Konverter-Topologie, die aufgrund des Aufbaus mit Submodulen insbesondere für Mittel- und Hochspannungsanwendungen geeignet ist. Der Grundaufbau des mehrphasigen Konverters umfasst zwei Konverterarme pro Phase, die jeweils eine Reihenschaltung von Submodulen aufweisen. Dabei sind die beiden Konverterarme am Phasenanschluss miteinander verbunden. Die andere Seite der Konverterarme ist mit der Gleichspannungsseite des Multilevel-Stromrichters verbunden. Die Wechselspannungsseite des modularen Multilevel-Stromrichters wird durch einen oder mehrere Phasenanschlüsse gebildet. Im grundlegenden Aufbau kann mit dem Konverter Energie zwischen der Gleichspannungsseite und der Wechselspannungsseite bidirektional übertragen oder in einem gewissen Maß zwischengespeichert werden.

Um zusätzlich einen gezielten Energieabbau zu ermöglichen, ist die Installation eines Bremsstellers zweckmäßig. Ein modularer Bremssteller ist aus der WO 2007/023061 A2 bekannt. Der modulare Bremssteller wird üblicherweise an die Gleichspannungsseite des modularen Multilevel-Stromrichters, beispielsweise zwischen einem DC+ und einem DC- Anschluss, angeschlossen.

Der Widerstand einer Bremsstelleranordnung wird oftmals auch als Bremswiderstand bezeichnet, da dieser dazu geeignet ist, elektrische Energie einer elektrischen Maschine, die aufgrund eines Bremsvorgangs erzeugt wird, in Wärme umzuwandeln. Dabei ist die Verwendung eines Bremsstellers nicht auf die Anwendung eines bremsenden elektrischen Antriebs beschränkt. So muss es sich nicht notwendigerweise um Bremsenergie handeln, die in Wärme umgewandelt wird. Der Bremssteller kann beispielsweise auch zur Stabilisierung eines Energieversorgungsnetzes eingesetzt werden, indem er elektrische Energie aus dem Energieversorgungsnetz in Wärme umwandelt. Der Begriff Bremswiderstand wurde gewählt, um den Widerstand, in dem eine vorgegebene elektrische Energie bzw. Leistung in Wärme bzw. Wärme pro Zeit umgesetzt wird, von anderen Widerständen unterscheiden zu können.

Mit der Bezeichnung, eine in Wärme umzusetzende Leistung ist im Folgenden gemeint, dass das Integral der Leistung über die Zeit in Wärme umgesetzt wird. Mit anderen Worten wird eine sich aus der Leistung über die Zeit ergebende Energiemenge in Wärme umgesetzt.

Eine Reihenschaltung wird definiert als eine Schaltung von Bauelementen, die vom gleichen Strom durchflossen werden. Die Reihenschaltung von Teilimpedanzen wirkt wie ein einziger Zweipol mit einer Impedanz, die der Summe der Teilimpedanzen entspricht.

Der Erfindung liegt die Aufgabe zugrunde, einen modularen Bremssteller zu verbessern.

Diese Aufgabe wird durch einen modularer Bremssteller gelöst, wobei der modulare Bremssteller mindestens ein Submodul und einen Bremswiderstand umfasst, wobei das mindestens eine Submodul und der Bremswiderstand in einer Reihenschaltung angeordnet sind, wobei der Widerstandswert des Bremswiderstands durch eine Steuervorrichtung veränderbar ist. Ferner wird diese Aufgabe durch eine modulare Antriebseinheit gelöst, die einen modularen Multilevel-Stromrichter und einen derartigen modularen Bremsstelleraufweist, wobei der Multilevel-Stromrichter gleichspannungsseitig mit dem modularen Bremssteller verbunden ist. Diese Aufgabe wird weiter durch ein Verfahren zum Betreiben eines modularen derartigen Bremsstellers oder einer derartigen modularen Antriebseinheit gelöst, wobei in Abhängigkeit von der in Wärme umzusetzenden Leistung die Steuervorrichtung den Widerstandswert des modularen Bremsstellers verändert.

Weitere vorteilhafte Ausgestaltungen der Erfindung sind in den abhängigen Ansprüchen angegeben.

Der Erfindung liegt unter anderem die Erkenntnis zugrunde, dass sich der Energierippel, das heißt die Energieschwankung, in den jeweiligen Kondensatoren der Submodule verringern lässt, wenn der Widerstandswert über den Arbeitsbereich des Bremsstellers veränderbar ist. Eine Energieschwankung ist gleichbedeutend mit einer Spannungsschwankung am Kondensator eines Submoduls, da Energie W und Spannung U am Kondensator mit einer Kapazität C über die Gleichung

$$W = \frac{1}{2} C \cdot U^2$$

zusammenhängen. Damit können die Submodule des modularen Bremsstellers einfacher und kostengünstiger ausgestaltet werden, da mit geringerer Energieschwankung bei vorgegebener Spannungsschwankungsbreite die Kapazität der Kondensatoren der Submodule geringer ausgelegt werden kann.

Mit Hilfe des im Widerstandswert veränderbaren Widerstand kann der Strom durch den Bremswiderstand beeinflusst werden. Die Beeinflussung des Stroms kann zudem auch durch die Submodule, die als Spannungsquellen wirken, vorgenommen werden.

Bei der Dimensionierung des Widerstands ist der Widerstandswert $R_B$ derart klein zu wählen, dass er bei gegebener Zwischenkreisspannung $U_D$ über

$$P = \frac{U_D^2}{R_B}$$

die gewünschte Leistung dauerhaft in Wärme umwandeln kann. Gleichzeitig hat es sich gezeigt, dass sich mit einem hohen Widerstandswert die Energieschwankungen bzw. Spannungsschwankungen an den Kondensatoren der Submodule reduzieren lassen. Durch den veränderbaren Widerstandswert des Bremsstellers kann das System nun in mehrere Richtungen, das heißt in Richtung hoher in Wärme umwandelbarer Leistungen und gleichzeitig in kleine und kostengünstige Submodule aufgrund geringer Energieschwankungen optimiert werden. Bei einem Betriebspunkt mit hoher in Wärme umzuwandelnder Leistung wird der Widerstandswert niedriger gewählt und in einem Betriebspunkt mit niedriger Leistung wird der Widerstandswert zugunsten einer geringeren Energieschwankung erhöht. Damit wird der gesamte Bremssteller leistungsfähiger bei gleichzeitig geringerer Baugröße sowie geringeren Herstellungskosten.

Darüber hinaus kann durch den veränderbaren Widerstandswert das Betriebsverhalten im Leerlauf des Bremsstellers verbessert werden. Mit Leerlauf bezeichnet man bei einem Bremssteller den Betrieb, in dem dieser betriebsbereit ist, jedoch keine oder nur unwesentlich elektrische Energie in Wärme umwandelt. Dieser Betriebszustand wird häufig auch als "Stand-By" oder "Hot-Stand-By" bezeichnet. Der modulare Bremssteller nimmt im Leerlauf nur Energie auf, um einer Entladung der Kondensatoren in den Submodulen entgegenzuwirken. Dafür ist ein Stromfluss durch den Bremssteller erforderlich. Um die damit einhergehenden Verluste gering zu halten, hat es sich als vorteilhaft erwiesen, den Widerstandswert des Bremswiderstandes auf einen möglichst geringen Wert zu verändern. Idealerweise entstehen bei einem Widerstandswert von 0 Ω keine oder nur vernachlässigbare elektrische Verluste im Bremswiderstand durch die Spannungshaltung der Kondensatoren der Submodule.

Die in Wärme umzusetzende Leistung ist proportional zum Gleichanteil $i_{BR,DC}$ des Stroms $i_{BR}$ durch den modularen Bremsstellers. Damit ist eine Veränderung in Abhängigkeit von der in Wärme umzusetzenden Leistung gleichbedeutend mit einer Veränderung in Abhängigkeit vom Gleichanteil $i_{BR,DC}$ des Stroms $i_{BR}$ durch den modularen Bremsstellers.

Bei einer vorteilhaften Ausgestaltung der Erfindung weist der modulare Bremssteller mindestens einen Schalter auf, wobei der Bremswiderstand durch mindestens zwei Teilwiderständen gebildet wird, wobei der Schalter derart angeordnet ist, dass mittels des Schalters der Stromfluss durch einen der mindestens zwei Teilwiderstände beeinflussbar ist. Eine Möglichkeit, den Widerstandswert des Bremsstellers zu verändern, besteht darin, dass der Bremssteller durch zwei oder mehr Teilwiderstände gebildet wird. Ein Schalter sorgt dabei dafür, dass in unterschiedlichen Schaltzuständen des Schalters unterschiedlich viele Teilwiderstände vom Strom durchflossen werden. Bei der Verwendung von zwei Teilwiderständen wird durch den Schalter entweder Strom durch nur einen Widerstand der beiden Teilwiderstand oder durch beide Teilwiderstände ermöglicht. Die Teilwiderstände, durch die ein Stromfluss ermöglicht wird, sind an der Umwandlung von elektrischer Energie in Wärme beteiligt. Darüber hinaus hat es sich als vorteilhaft erwiesen, einen weiteren Schaltzustand vorzusehen oder einen weiteren Schalter anzuordnen, der alle Teilwiderstände überbrückt. Diese Anordnung ermöglicht einen Widerstandswert des Bremswiderstands von idealerweise 0 Ω und eignet sich damit für den Betrieb im Leerlauf.

Dabei können die Teilwiderstände in einer Reihenschaltung angeordnet sein. Der Schalter ist dabei derart angeordnet, dass zumindest einer der Teilwiderstände mittels des Schalters überbrückbar ist, so dass durch den überbrückten Teilwiderstand oder die überbrückten Teilwiderstände kein Stromfluss zustande kommt. Alternativ können die Teilwiderstände elektrisch parallel angeordnet sein, wobei zu mindestens einem der Teilwiderstände der Schalter elektrisch in einer Reihenschaltung angeordnet ist. Damit entstehen parallele Stromzweige, wobei in jedem Stromzweig ein Teilwiderstand angeordnet ist. In mindestens einem der Stromzweige ist dabei der Schalter angeordnet, der es ermöglicht, einen Stromfluss durch diesen Stromzweig zu verhindern. In diesem Fall trägt der Teilwiderstand nicht, insbesondere nicht nennenswert, zur Umwandlung der elektrischen Energie in Wärme bei.

Der Teilwiderstand kann durch einen einzelnen Widerstand oder alternativ aus mehreren Einzelwiderständen gebildet werden, die in einer Reihenschaltung, einer Parallelschaltung oder einer Kombination aus Reihen- und Parallelschaltung angeordnet sind.

Bei einer weiteren vorteilhaften Ausgestaltung der Erfindung sind die mindestens zwei Teilwiderstände jeweils in parallelen Stromzweigen angeordnet, wobei zumindest in einem der parallelen Stromzweige der Schalter und einer der mindestens zwei Teilwiderstände in einer weiteren Reihenschaltung angeordnet sind. Durch die parallele Anordnung der Teilwiderstand ergibt sich dann für den Widerstandswert des Bremswiderstandes der geringste Wert, wenn alle Teilwiderstände vom Strom durchflossen werden und somit an der Umsetzung der elektrischen Energie beitragen. Da für die Maximalleistung der geringste Widerstandswert für den Bremswiderstand vorteilhaft ist, tragen bei Maximalleistung des Bremsstellers und entsprechend geringstem Widerstandswert des Bremswiderstands alle Widerstände zur Energieumwandlung in Wärme bei. Damit verteilt sich die Wärme bei Maximalleistung auf alle Teilwiderstände und die thermische Auslegung für die einzelnen Teilwiderstände vereinfacht sich. Im Teillastbereich sind dann nur weniger Teilwiderstände aktiv, d.h. vom Strom durchflossen. Aufgrund der geringeren Leistung hat es sich gezeigt, dass dies für die an der Umsetzung der elektrischen Leistung in Wärme beteiligten Teilwiderstände unproblematisch ist und keine erhöhte thermische Auslegung erfordert. Somit kann durch die parallele Anordnung der Teilwiderstände in parallele Stromzweige bei maximaler Leistung des Bremsstellers die Wärme auf alle Teilwiderstände derart günstig verteilt werden, so dass sich für die einzelnen Teilwiderstände nur eine geringe thermische Belastung ergibt.

Bei zwei parallelen Stromzweigen muss mindestens einer diese Zweige einen Schalter in Reihe zu dem Teilwiderstand aufweisen, so dass durch den Schalter je nach Schaltzustand des Schalters der Strom durch einen oder beide Stromzweige fließt.

Bei einer weiteren vorteilhaften Ausgestaltung der Erfindung weist jeder der Stromzweige jeweils eine weitere Reihenschaltung aus einem der mindestens zwei Teilwiderstände und einem Schalter auf. Besonders vorteilhaft ist es, alle Stromzweige mit einem Schalter zu versehen. In diesem Fall kann jeder Zweig von der Umwandlung in Wärme ausgenommen werden. Dadurch kann gerade im Teillastbereich, wenn nicht alle Stromzweige vom Strom durchflossen werden, jeder einzelne Stromzweig beispielsweise zum Schutz vor thermischer Überlastung abgeschaltet werden. Darüber hinaus lässt sich durch entsprechende Schalthandlungen der Schalter die Wärme, beispielsweise gleichmäßig oder in Abhängigkeit der Leistungsfähigkeit der einzelnen Teilwiderstände, auf die unterschiedlichen Teilwiderstände verteilen.

Darüber hinaus ist es möglich, durch unterschiedliche Widerstandswerte $R_B$ der jeweiligen Teilwiderstände, eine Vielzahl von unterschiedlichen Widerstandswerte für den Bremswiderstand zu realisieren. Mit anderen Worten ist es vorteilhaft, dass die Stromzweige jeweils einen Teilwiderstand mit unterschiedlichem Widerstandswert aufweisen. Durch unterschiedliche Werte von n Teilwiderständen lassen sich dann bis zu $2^n-1$ Widerstandswerte für den Bremswiderstand erzeugen. Dabei ist der Widerstandswert $R_B = \infty$ für den Fall, dass alle Schalter geöffnet sind, nicht eingerechnet, da dieser Zustand für den Betrieb des Bremsstellers nicht sinnvoll ist. Dadurch lässt sich eine gute Abstufung der möglichen Widerstandswerte für den Bremssteller erzeugen, welche einen Betrieb mit niedrigen Energieschwankungen ermöglicht.

Bei einer weiteren vorteilhaften Ausgestaltung der Erfindung wird der Schalter durch einen Halbleiter, insbesondere durch einen IGBT mit anti-paralleler Diode, gebildet. Da bereits die Halbleiter der Submodule mit einer Ansteuerschaltung gekoppelt sind, ist der Mehraufwand sehr gering, auch die Schalter des Bremswiderstands als Halbleiter auszuführen. Da die Submodule des Bremsstellers aufgrund von Anforderungen bezüglich Zwischenkreisspannung und Leistung vorzugsweise IGBTs aufweisen, können auch für die Ausgestaltung der Schalter IGBTs verwendet werden. Besonders vorteilhaft ist die Verwendung eines IGBTs, da dieser die gleiche Ansteuereinheit verwenden kann wie die Halbleiter der Submodule. Zum Schutz vor einer kurzzeitig auftretenden Spannungsumkehr, kann der IGBT eine anti-parallele Diode aufweisen. Diese ermöglicht einen Stromfluss in der Gegenrichtung zum IGBT und schützt vor dessen Beschädigung.

Darüber hinaus ist durch den Einsatz eines Halbleiters die Änderung des Widerstandswertes des Bremswiderstands derart schnell möglich, dass eine hohe Dynamik des Bremsstellers erreicht wird. Dies ermöglicht auch den Betrieb eines derartigen Bremsstellers in Stromrichtern mit geringer Zwischenkreiskapazität, die aufgrund der geringen Spannungspufferung im Zwischenkreis eine hohe Empfindlichkeit gegenüber Laständerungen aufweisen. Diese unerwünschten Auswirkungen lassen sich durch einen Bremssteller mit hoher Dynamik beseitigen.

Bei einer weiteren vorteilhaften Ausgestaltung der Erfindung ist parallel zu dem Bremswiderstand ein weiterer Schalter angeordnet. Für den Betrieb im Leerlauf, bei dem der modulare Bremssteller keine Leistung in Wärme umsetzen soll, hat es sich als vorteilhaft erwiesen, den Bremswiderstand mittels des weiteren Schalters zu überbrücken. Um den Bremswiderstand zu überbrücken können auch alle Teilwiderstände überbrückt werden. Dies führt dazu, dass ein Strom durch den Bremssteller, der zur Aufrechterhaltung der Kondensatorspannung und ggf. zur Versorgung von Ansteuer- oder Regelungsbaugruppe benötigt wird, nicht zu einem Strom durch den Bremswiderstand führt. Ein derartiger Strom würde auch im Leerlauf des Bremsstellers zu einer Umwandlung von elektrischer Energie in Wärme führen, obwohl dies beim Betrieb im Leerlauf nicht gewünscht ist, da dieser Verluste erzeugt. Durch den weiteren Schalter können die Verluste des Schalters im Leerlauf geringgehalten werden und einen hohen Wirkungsgrad des Bremsstellers sowie der modularen Antriebseinheit über alle Betriebsmodi und insbesondere im Leerlauf sicherstellen.

Darüber hinaus hat es sich als vorteilhaft erwiesen, in Reihe zu dem weiteren Schalter eine Induktivität anzuordnen. Dies verbessert das Steuer- und Regelverhalten im Leerlauf, ohne sich negativ auf die Dynamik des modularen Bremsstellers auszuwirken.

Bei einer weiteren vorteilhaften Ausgestaltung der Erfindung ist der Multilevel-Stromrichter wechselspannungsseitig mit einer elektrischen Maschine verbunden, wobei die Steuervorrichtung eingerichtet ist, elektrische Energie aus einem Bremsvorgang der elektrischen Maschine zumindest teilweise durch den modularen Bremssteller in Wärme umzusetzen. Eine elektrische Maschine erzeugt bei einem Bremsvorgang elektrische Energie. Falls der netzseige Stromrichter nicht für die Rückspeisung von elektrischer Energie in das Energieversorgungsnetz ausgelegt ist oder das Netz nicht aufnahmefähig ist, kann mit Hilfe des Bremsstellers die elektrische Energie verschleißfrei in Wärme umgewandelt werden. Dies stellt den sicheren Betrieb der modularen Antriebseinheit, insbesondere unabhängig vom Betriebszustand des Energieversorgungsnetzes, sicher. Darüber hinaus kann die elektrische Maschine hochdynamisch, d.h. mit schnellen Lastwechseln, betrieben werden, da durch den vorgeschlagenen modularen Bremssteller eine hinreichend schnelle Reaktion gewährleistet werden kann.

Bei einer weiteren vorteilhaften Ausgestaltung der Erfindung ist der Multilevel-Stromrichter wechselspannungsseitig mit einem Energieversorgungsnetz verbunden, wobei die Steuervorrichtung eingerichtet ist, insbesondere zur Verbesserung der Stabilität des Energieversorgungsnetz elektrische Energie in Wärme umzusetzen. Damit eignet sich der Multilevel-Stromrichter insbesondere für Aufgaben der Energieübertragung und -verteilung. Beispielsweise kann ein derartiger Multilevel-Stromrichter dazu genutzt werden, eine entfernt gelegene Energiequelle, beispielsweise ein Offshore-Windpark mit einem Einspeisepunkt am Festland zu verbinden. Sollte das Energieversorgungsnetz am Einspeisepunkt nicht aufnahmefähig sein, so kann mittels des Bremsstellers elektrische Energie in Wärme umgewandelt werden. Damit kann ein Abschalten und ein aufwendiges Wiederanfahren des Windparks beispielsweise in kurzzeitig anstehenden Fehlerfällen, die zu einer beschränken Aufnahmefähigkeit führen, verhindert werden.

Dies erhöht die Stabilität sowohl für das Energieversorgungsnetz als auch für den energieerzeugenden Windpark.

Auch bei der Kopplung zweier Energieversorgungsnetze kann der Bremssteller dazu verwendet werden, eine unausgeglichene Leistungsbilanz auszugleichen und damit zu einem stabilen Betrieb beider Energieversorgungsnetze beitragen.

Bei einer weiteren vorteilhaften Ausgestaltung der Erfindung wird mit zunehmender in Wärme umzusetzender Leistung der Widerstandswert verringert. Durch die Verringerung des Widerstandes kann der Strom durch den Bremswiderstand erhöht werden. Dadurch steigt die Leistungsfähigkeit des Bremsstellers. Gleichzeitig kann damit ein Großteil der Leistung mittels eines Gleichstroms in Wärme umgewandelt werden. Ebenso wird durch den höheren Widerstandswert bei geringerer Leistung die Energieschwankung in den Submodulen, insbesondere in den Kondensatoren der Submodulen, reduziert. Somit kann die Leistungsfähigkeit des Bremsstellers bei geringeren Anforderungen an die Kondensatoren der Submodule verbessert werden. Dadurch lassen sich hohe Leistungen durch den Bremssteller in Wärme umsetzen, wobei gleichzeitig die Anforderungen an die Kapazität der Kondensatoren der Submodule abnimmt. Dies resultiert in einer geringen Baugröße des Bremsstellers sowie geringen Herstellungskosten bei größerer Leistungsfähigkeit des Bremsstellers.

Bei einer weiteren vorteilhaften Ausgestaltung der Erfindung weisen die Submodule jeweils mindestens einen Kondensator auf, wobei der Widerstandswert derart verändert wird, dass ein vorgegebener Grenzwert für eine Spannungsschwankung der Spannung des jeweiligen Kondensators der Submodule unterschritten wird. Der Grenzwert einer Spannungsschwankung kann dabei einem Intervall entsprechen, in dem sich die Spannung des Kondensators befinden darf. Eine Veränderung des Widerstandswertes kann zur Reduzierung von Energieschwankungen in den Submodulen genutzt werden. Eine Energieschwankung in den Submodulen äußert sich in Spannungsänderungen am Kondensator des Submoduls. Bei einer vorgegebenen Schwankungsbreite der Spannung des Kondensators der Submodule kann bei verringerter Energieschwankung der Submodule die Kapazität des Kondensators kleiner ausgelegt werden. Dabei kann die Regelung oder Steuerung zur Vorgabe des Widerstandswertes des Bremsstellers darauf ausgelegt werden, einen Grenzwert für die Spannungsschwankung am Kondensator einzuhalten. Damit kann sichergestellt werden, dass dieser Bereich im Betrieb nicht verlassen wird. Dies erlaubt die Verwendung besonders geringer Kapazitätswerte für den Kondensator der Submodule.

Bei einer weiteren vorteilhaften Ausgestaltung der Erfindung wird im Leerlauf des modularen Bremsstellers der Widerstandswert des Bremsstellers auf einen Wert $R_B < 1\ \Omega$, insbesondere auf einen Wert $R_B < 0{,}1\ \Omega$ verändert. Durch die Reduktion des Widerstandswertes im Leerlauf des modularen Bremsstellers, bei dem der Bremssteller keine elektrische Energie in Wärme umwandeln soll, werden die Verluste des modularen Bremstellers und des modularen Antriebssystems reduziert. Je kleiner der Widerstandswert, desto geringer die Verluste im Leerlauf. Ein derartiger Widerstandswert ist beispielsweise durch ein Überbrücken des Bremswiderstandes mit einem weiteren Schalter erreichbar. Allerdings weist der weitere Schalter auch oftmals einen nicht zu vernachlässigen Widerstand auf. Beispielsweise durch die Kontakte eines mechanischen Schalters oder durch einen Bahnwiderstand eines Halbleiters, so dass sich der Widerstand nicht auf null reduzieren lässt. Darüber hinaus hat sich gezeigt, dass kleine Widerstandswerte von $R_B < 0{,}1\ \Omega$ dazu geeignet sind, auftretende Schaltüberspannung, hervorgerufen durch Schalthandlungen der Submodule zu reduzieren. Somit kann ein vom Idealzustand $R_B = 0\ \Omega$ abweichender Widerstandswert sich positiv auf im Betrieb des modularen Bremsstellers entstehende Spannungs- und Stromspitzen auswirken, da ein derartiger Widerstandswert dämpfend wirkt und geeignet ist, diese Spitzen zu eliminieren oder zumindest zu verkleinern und gleichzeitig dabei keine nennenswerten Verluste im modularen Antriebssystem erzeugt.

Im Folgenden wird die Erfindung anhand der in den Figuren angegebenen Ausführungsbeispiele näher beschrieben und erläutert. Es zeigen:

FIG 1            einen modularen Bremssteller,
FIG 2 bis FIG 4  Ausführungsbeispiele für das Submodul,

FIG 5      ein Ausführungsbeispiel des Bremswiderstands,

FIG 6      Ausführungsbeispiele für den Schalter und den weiteren Schalter

FIG 7      Zeitverläufe von Spannung und Strom,

FIG 8      Anhängigkeit des veränderbaren Widerstandswertes des Bremswiderstands,

FIG 9      Auswirkungen des Steuerverfahrens auf die Energieschwankungen und

FIG 10 bis FIG 12      Ausführungsbeispiele der modularen Antriebseinheit.

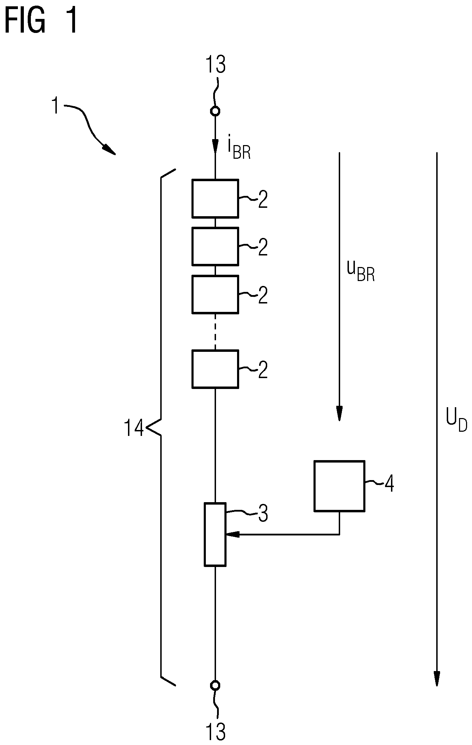

Die FIG 1 zeigt einen modularen Bremssteller 1. Dieser weist eine Reihenschaltung 14 von mindestens einem Submodul 2 und einem Bremswiderstand 3 auf. Die Reihenschaltung 14 kann eine Vielzahl von Submodulen 2 aufweisen. Die Submodule 2, sofern es mehr als ein Submodul 2 ist, sind elektrisch in Reihe angeordnet. Der modulare Bremssteller 1 ist dazu eingerichtet, an seinen Anschlüssen 13 mit einem Zwischenkreis 9 eines Stromrichters verbunden zu werden.

Über den in Reihe angeordneten Submodule 2 ist mit Hilfe einer Ansteuerbaugruppe 16 eine Spannung $u_{BR}$ erzeugbar. Mit der erzeugten Spannung $u_{BR}$ lässt sich ein Strom $i_{BR}$ durch den modularen Bremssteller 1 bewirken und steuern sowie regeln. Der Strom $i_{BR}$ fließt auch durch den Bremswiderstand 3 und bewirkt eine Umwandlung von elektrischer Energie in Wärme. Über dem modularen Bremssteller 1 liegt die Betriebsspannung an, die der Zwischenkreisspannung $U_D$ entspricht, wenn der modulare Bremssteller 1 mit der Gleichspannungsseite eines Stromrichters verbunden ist.

Eine Steuervorrichtung 4 des modularen Bremsstellers 1 ist dabei in der Lage, den Widerstandswert $R_B$ des Bremswiderstandes 3 zu verändern. Die Veränderung kann dabei beispielsweise in einem zuvor festgelegten Wertebereich geschehen.

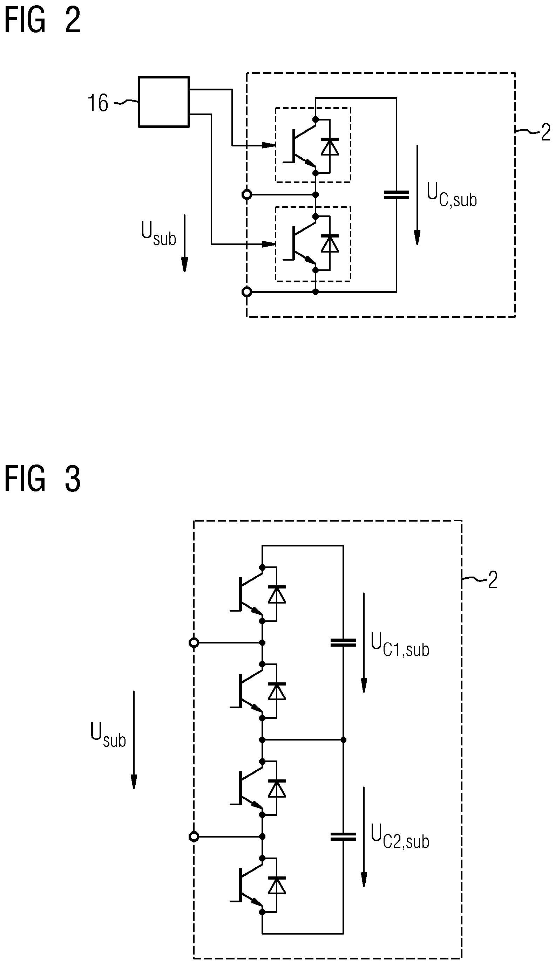

Die Figuren 2 bis 4 zeigen Ausführungsbeispiele von Submodulen 2. Alle bekannten Submodule 2, insbesondere die Submodule 2 der Figuren 2 bis 4 sind für den modularen Bremssteller 1 geeignet. Zur Vermeidung von Wiederholungen wird auf die Beschreibung zur FIG 1 und die dort eingeführten Bezugszeichen verwiesen.

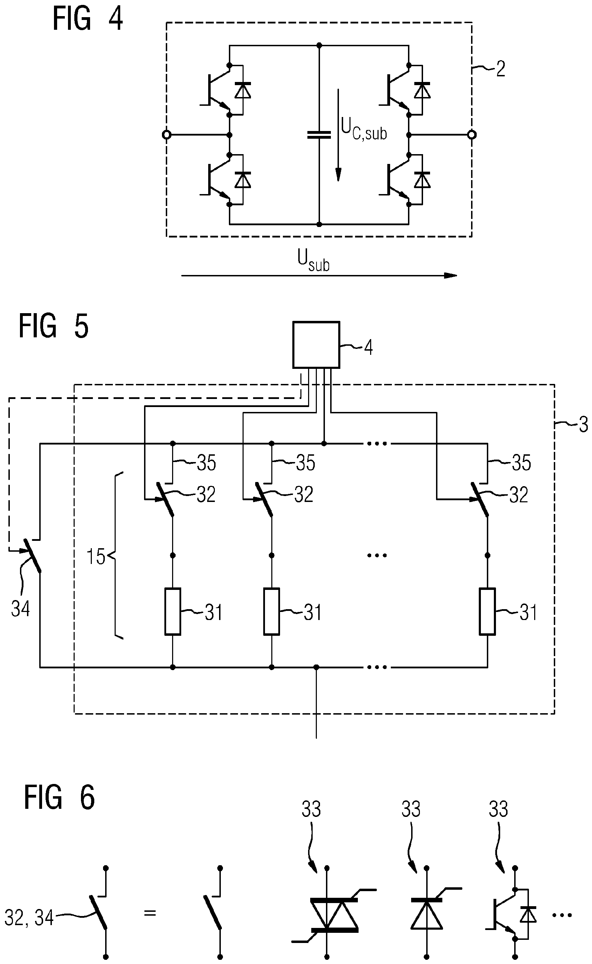

Die dargestellten Ausführungsbeispiele des Submoduls 2 umfassen mindestens zwei Halbleiterschalter und mindestens einen Kondensator. Durch Schalthandlungen der Halbleiter-schalter kann eine Ausgangsspannung $U_{sub}$ an den Anschlüssen des Submoduls 2 erzeugt werden. Dabei übermittelt eine Ansteuerbaugruppe 16 die Ansteuersignale an die Halbleiterschalter des Submoduls 2. Die Ansteuerbaugruppe 16 ist vorzugsweise außerhalb des Submoduls 2 angeordnet und somit nicht Teil des Submoduls 2. Alternativ ist es möglich, jedes Submodul 2 mit einer eigenen auszustatten. Jedoch hat es sich als vorteilhaft erwiesen, mit einer Ansteuerbaugruppe 16 alle Submodule 2 des modularen Bremsstellers 1 anzusteuern. Darüber hinaus kann die Ansteuerbaugruppe 16 dann die für die Steuerung und Regelung der Spannungen und Ströme erforderlichen Berechnungen vornehmen. Insbesondere kann die Ansteuerbaugruppe 16 auch Teil einer Steuervorrichtung 4 sein, mit dem der Widerstandswert $R_B$ des Bremswiderstands 3 verändert oder beeinflusst werden kann. In den Ausführungsbeispielen der Figuren 3 und 4 wurde auf die Darstellung der Ansteuerbaugruppe 16 aus Gründen der Übersichtlichkeit verzichtet.

Die FIG 2 zeigt ein sogenanntes Halbbrückenmodul. Dies weist zwei Halbleiterschalter und einen Kondensator auf. An dem Kondensator liegt die Spannung $U_{C,sub}$ an. Durch Schalthandlungen der Halbleiterschalter kann die Ausgangsspannung $U_{sub}$ von null oder $U_{C,sub}$ an den Anschlüssen des Submoduls 2 erzeugt werden.

Die FIG 3 zeigt ein sogenanntes Doppelhalbbrückenmodul. Dies weist vier Halbleiterschalter und zwei Kondensatoren auf. An den Kondensatoren liegt jeweils die Spannung $U_{C1,sub}$ bzw. $U_{C2,sub}$ an. Durch Schalthandlungen der Halbleiterschalter kann die Ausgangsspannung $U_{sub}$ von null, von einer der Kondensatorspannungen $U_{C1,sub}$, $U_{C2,sub}$ oder von der Summe der Kondensatorspannungen $UC1,sub$, $UC2,sub$ an den Anschlüssen des Submoduls 2 erzeugt werden.

Die FIG 4 zeigt ein sogenanntes Vollbrückenmodul. Dies weist vier Halbleiterschalter und einen Kondensator auf. An dem Kondensator liegt die Spannung $U_{C,sub}$ an. Durch Schalthandlungen der Halbleiterschalter kann die Ausgangsspannung $U_{sub}$ von null, der positiven oder der negativen Kondensatorspannung $\pm U_{C,sub}$ an den Anschlüssen des Submoduls 2 erzeugt werden.

Eine Möglichkeit, den Widerstandswert des Bremswiderstands 3 veränderbar zu gestalten zeigt FIG 5. Dabei wird der Bremswiderstand 3 durch mindestens zwei parallele Stromzweige 35 gebildet. Jeder dieser Stromzweige 35 weist jeweils einen Teilwiderstand 31 auf. Die n Teilwiderstände 31 der n Stromzweige 35 haben jeweils einen Widerstandswert $R_1$, $R_2$, ..., $R_n$. Diese Widerstandswerte $R_1$, $R_2$, ..., $R_n$ können gleich sein oder sich unterscheiden. Darüber hinaus weisen in diesem Ausführungsbeispiel alle Stromzweige 35 einen Schalter 32 auf. Dieser Schalter 32 ist mit dem jeweiligen Teilwiderstand 31 in einer weiteren Reihenschaltung 15 angeordnet. Es ist jedoch alternativ zum dargestellten Ausführungsbeispiel möglich, einen der Stromzweige 35 ohne Schalter 35, also schalterfrei, auszuführen. Dabei können die Teilwiderstände 31 jeweils aus einer Kombination von mehreren Einzelwiderständen gebildet werden.

Zusätzlich kann parallel zum Bremswiderstand 3 ein weiterer Schalter 34 angeordnet sein, der den Bremswiderstand 3 überbrückt. Das Überbrücken des Bremswiderstands kann beispielsweise durch das Überbrücken aller Teilwiderstände 31 realisiert werden. Damit kann insbesondere im Leerlauf des Bremsstellers 1 ein besseres Betriebsverhalten erzeugt werden. Die zum Bremswiderstand 3 parallele Anordnung des weiteren Schalters 34 kann auch dadurch erreicht werden, dass der weitere Schalter 34 im Bremswiderstand 3 und elektrisch parallel zu den Stromzweigen 35 angeordnet ist. Der weitere Schalter 34 bewirkt, dass der wirksame Wert des Bremswiderstands 3 auf idealerweise 0 Ω reduziert wird und dadurch keine Verluste erzeugt, wenn der Bremssteller keine Leistung in Wärme umsetzen soll.

Die Ansteuerung der Schalter 32 erfolgt über die Steuervorrichtung 4. Darüber hinaus kann optional auch der weitere Schalter 34 durch die Steuervorrichtung angesteuert werden. Ansteuerung bedeutet in diesem Fall, den Schalter 32 bzw. weiteren Schalter 34 in einen seiner Schaltzustände versetzen zu können.

Die FIG 6 zeigt verschieden Ausgestaltungsformen des Schalters 32 und des weiteren Schalters 34. Hierfür können beliebige (elektro-)mechanische, pyrotechnische oder Halbleiterschalter genutzt werden.

In Mittel- und Hochspannungsanwendungen ist als Schalter 32 im Stromzweig 35 der Einsatz eines Halbleiters in IGBT-Technik vorteilhaft. Der IGBT weist dann parallel zum Schaltelement eine anti-parallele Diode auf. Durch seine Fähigkeit, Ströme abschalten zu können, eignet er sich im Besonderen für die Anordnung als Schalter 32 in den jeweiligen Strompfaden 35. Somit kann im Betrieb des Bremsstellers auch unter Last der Widerstandswert $R_B$ des Bremswiderstands $R_B$ durch Abschalten eines oder mehrerer IGBTs vergrößert werden. Zudem ist der IGBT in der erforderlichen Leistungsfähigkeit am Markt verfügbar. Zudem ist es möglich, den gleichen IBGT sowohl als Schalter 32 bzw. weiteren Schalter 34 als auch als Halbleiterschalter in den Submodulen2 einzusetzen. Dies erhöht die Anzahl der Gleichzeile im modularen Bremssteller 1.

Für die Ausgestaltung des weiteren Schalters 34 eignen sich u.a. aufgrund des geringen Durchlasswiderstandes anti-parallele Thyristoren oder (elektro-) mechanische Schalterausführungen.

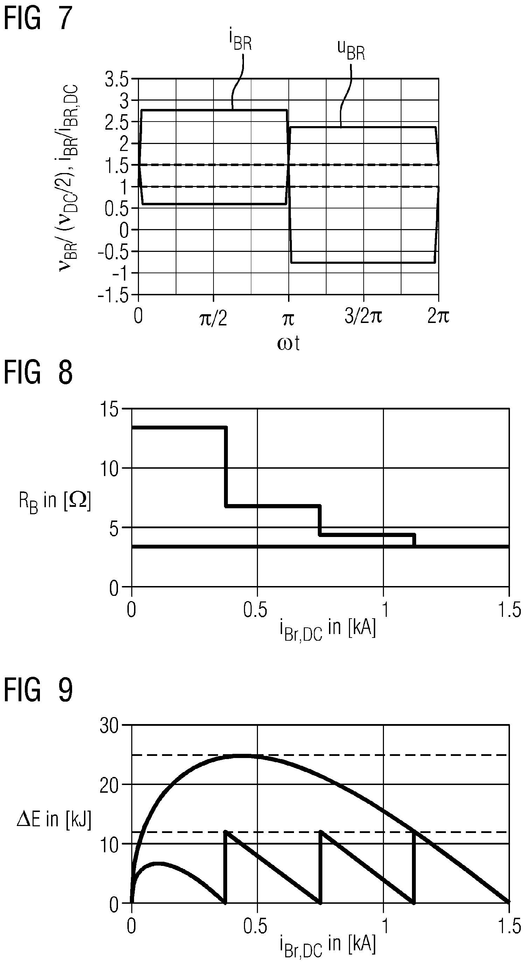

Die FIG 7 zeigt ein Beispiel für einen Zeitverlauf für die über die in Reihe angeordneten Submodule 2 erzeugte Spannung $u_{BR}$ und den durch den modularen Bremssteller 1 fließenden Strom $i_{BR}$. Diese Größen sind blockförmig und setzen sich aus einem Gleichanteil und einem alternierenden Anteil zusammen. Alternativ können sie auch durch eine Sinusform oder eine Überlagerung mehrerer Sinusfunktionen gebildet werden. Derartige Verläufe können für den Betrieb des modularen Bremsstellers 1 genutzt werden.

Die FIG 8 zeigt beispielhaft eine mögliche Veränderung des Widerstandswertes $R_B$ des Bremswiderstands 3 einer Anordnung gemäß FIG 5 in Abhängigkeit vom Gleichanteil des Stroms $i_{BR}$ durch den Bremssteller. Mit größer werdender in Wärme umzusetzender Leistung, die einer Steigerung des Gleichanteils $i_{BR,DC}$, des Gleichstroms $i_{BR}$, durch den modularen Bremssteller 1 entspricht, wird der Widerstandswert $R_B$ reduziert. Zum Vergleich ist auch der Betrieb mit einem konstanten Widerstandswert als konstante Linie dargestellt. Da die Dimensionierung des Bremswiderstandes 3 auf den gesamten Arbeitsbereich zu erfolgen hat, entspricht die konstante Linie dem Widerstandswert $R_B$ des Bremswiderstands 3 mit veränderbaren Widerstandswert $R_B$ bei maximaler Leistung.

Ein wichtiges Kriterium für die zu installierende Kondensatorenergie in den Submodulen 2 ist die Energieschwankung $\Delta E$, auch als Energierippel bezeichnet, der aus dem Integral über dem Produkt aus der durch die Submodule erzeugten Spannung $u_{BR}$ und dem Strom $i_{BR}$ durch den modularen Bremssteller 1 resultiert. Die FIG 9 zeigt beispielhaft die Energieschwankung $\Delta E$ am Beispiel eines Aufbaus nach FIG 5 und einer Veränderung des Widerstandswertes $R_B$ des Bremswiderstands 3 gemäß FIG 8. Für einen konstanten Widerstandswert $R_B$ ergibt sich die obere Kurve der Energieschwankung $\Delta E$, während sich für den nach FIG 8 veränderten Widerstandswert $R_B$ sich die untere Kurve ergibt. Daraus wird deutlich, dass sich die Energieschwankung $\Delta E$ in den Kondensatoren der Submodule 2 durch einen veränderbaren Widerstandswert $R_B$ des Bremswiderstands 3 deutlich verringern lässt. Dadurch können die Kondensatoren bei gegebener Spannungsschwankungstoleranz mit geringerer Kapazität ausgelegt werden. Dies führt zu einer geringeren Baugröße sowie zu geringeren Herstellkosten der einzelnen Submodule 2.

Die Energieschwankung $\Delta E$ ist ein Maß, welche Energie im Kondensator des Submoduls 2 gespeichert werden muss. Es bestimmt somit die Dimensionierung des Kondensators hinsichtlich seiner Kapazität. Durch die Verringerung der Energieschwankung $\Delta E$ kann der Kondensator in den Submodulen 2 hinsichtlich seiner Kapazität mit geringeren Werten ausgelegt wer-den. Dadurch werden das Submodul 2 und der gesamte modulare Bremssteller 1 kostengünstiger.

Die dargestellten Zusammenhänge basieren auf einer Betrachtung eines modularen Bremsstellers 1, der bei einer Zwischenkreisspannung von $U_{DC}$ = 10 kV betrieben wird. Die maximale in Wärme umzusetzende Leistung beträgt $P_{BR}$ = 15 MW, was einem Strom $i_{BR}$ = 1,5 kA entspricht. Damit ist ein Widerstandswert $R_B$ des Bremswiderstands 3 von $R_B$ = 3,36 Ω notwendig. Nach dem Stand der Technik ist nur dieser Gesamtwiderstand aktiv im Strompfad. Der vorgeschlagene Aufbau wird beispielsweise mit vier parallelen Stromzweigen 35 mit jeweils $R_i$ = 13,44Ω ausgeführt. In Abhängigkeit vom Strom durch den Bremssteller 3 können die einzelnen Stromzweigzweige 35 mittels der jeweiligen Schalter 32 sukzessive zugeschaltet werden. Zu Beginn ist dabei nur einer der Teilwiderstände 31 über den entsprechenden Stromzweig 35 zugeschaltet, wodurch der Widerstandswert $R_B$ des Bremswiderstands 3 $R_B$ = 13,44Ω beträgt. Mit zunehmenden Strom $i_{BR}$ durch den modularen Bremssteller 1 werden zwei, drei und schließlich alle vier Teilwiderstände 31 mittels der entsprechenden Schalter 32 parallel zugeschaltet. Dadurch wird der Widerstandswert $R_B$ des Bremswiderstands 3 reduziert und beträgt bei allen aktiven Stromzweigen 35 dann $R_B = 3,36\Omega$. Bei hohen Strömen sind somit alle Teilwiderstände 31 aktiv. Die gesamte Leistung wird so in vorteilhafter Weise auf alle verfügbaren Teilwiderstände 31 und Stromzweige 35 verteilt und verbessert damit auch das thermische Verhalten gegenüber den aus dem Stand der Technik bekannten Bremsstellern.

Bei kleineren Leistungen kann im gezeigten Beispiel die Energieschwankung $\Delta E$ und somit die zu installierende Kondensatorenergie um über 50% reduziert werden. Dies ist in der FIG 9 durch die gestrichelten Linien dargestellt. Hierbei sind noch deutlich bessere Werte erreichbar, wenn die Abstufung mit entsprechenden Widerstandswerten $R_i$ der Teilwiderstände 31 und Anzahl an Stromzweigen 35 ausgeführt wird.

Da im Teillastbereich der zu führende Strom durch den modularen Bremssteller deutlich kleiner ist, erreicht der Betrieb mit weniger parallelen Teilwiderständen 31 und Stromzweigen 35 nicht seine thermische Grenze, wodurch bei entsprechender Auslegung keine weiteren Einschränkungen entstehen. Weiterhin vorteilhaft ist die Nutzung des weiteren Schalters 34 zur Überbrückung des Bremswiderstands 3 und der Teilwiderstände 31. Für gewöhnlich wird der modulare Bremssteller 1 den Großteil der Zeit im Leerlauf, auch als "Hot-Stand-By" bezeichnet, betrieben. Dabei sind die Submodule 2 vorgeladen und es fließt ein geringer Strom $i_{BR}$ durch den modularen Bremssteller 1, um die Kondensatoren der Submodule 2 aufgrund von elektrischen Verlusten nachzuladen. Dieser Strom fließt ebenfalls ohne weiteren Schalter 34 durch den Bremswiderstand 3 und generiert im Leerlauf unerwünschte Verluste. Durch Nutzung des weiteren Schalters 34 zur Überbrückung des Bremswiderstands 3 und der Teilwiderstände 31 im Leerlauf können diese Verluste eliminiert und die Gesamteffizienz sowie der Wirkungsgrad des Systems gesteigert werden.

Es wird deutlich, dass gerade in einem Bereich von etwa 1/3 des maximalen Stroms $i_{BR}$ durch den modularen Bremssteller 1 der vorgeschlagene Aufbau und das vorgeschlagene Verfahren besonders vorteilhaft sind, da es zu einer besonders großen Reduzierung der Energieschwankung $\Delta E$ beiträgt. Dies ist die Besonderheit bei dem Betrieb des modularen Bremsstellers 1: Der Energierippel nimmt im Teillastbereich deutlich zu. Bei leistungselektronischen Schaltungen steigt der Energierippel üblicherweise mit der Ausgangsleistung. Hieraus wird der Vorteil des vorgeschlagenen Aufbaus und des vorgeschlagenen Verfahrens deutlich. In Abhängigkeit vom Lastpunkt können die einzelnen parallelen Stromzweige 35 hinzugeschaltet werden, wodurch sich bei einem festen Betriebspunkt der Teillastfaktor ändert. Somit kann der Energierippel stets gering gehalten werden, wodurch die Anzahl und die Kapazität der zu installierenden Kondensatoren in den Submodulen 2 deutlich reduziert werden können. Im Vergleich zu bisher bekannten Bremsstellern muss in dem vorgeschlagenen Aufbau keine höhere Menge an Widerständen installiert werden.

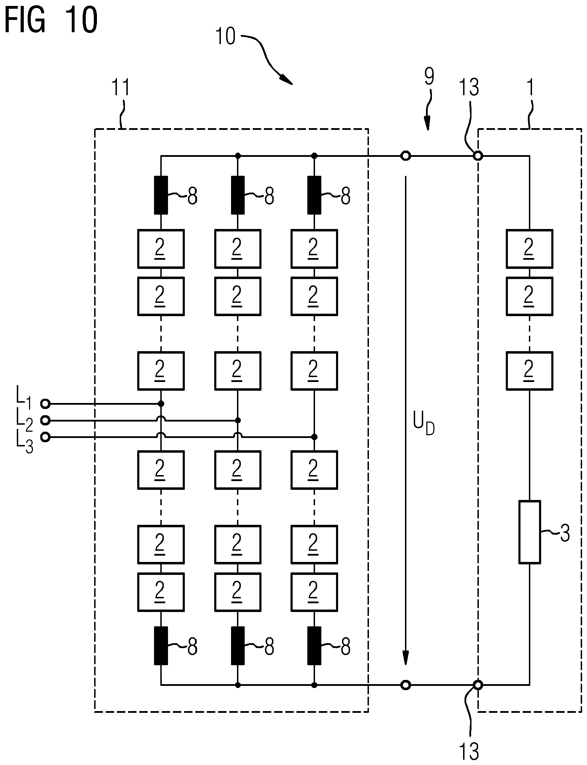

Die FIG 10 zeigt eine modulare Antriebseinheit 10 mit einem modularen Multilevel-Stromrichter 11 und einem modularen Bremssteller 1. Diese sind über den Zwischenkreis 9, an dem die Spannung $U_D$ anliegt, miteinander verbunden. Mit anderen Worten ist der modulare Multilevel-Stromrichter 11 gleichspannungsseitig mit den Anschlüssen 13 des modularen Bremssteller 1 verbunden. Dabei kann, nicht notwendigerweise, der modulare Multilevel-Stromrichter 11 die gleichen Submodule aufweisen wie der modulare Bremssteller 1. Die Reihenschaltung der Submodule des modularen Multilevel-Stromrichters 21 weist darüber hinaus noch vorzugsweise eine Induktivität 8 auf, die das Regelverhalten des modularen Multilevel-Stromrichters 11 verbessert. Die Anschlüsse L1, L2, L3 stellen die wechselspannungsseitigen Anschlüsse oder kurz die Wechselspannungsseite des modularen Multilevel-Stromrichters 11 dar. In diesem Ausführungsbeispiel ist der modulare Multilevel-Stromrichter 11 dreiphasig ausgeführt. Alternativ ist auch eine einphasige Ausführung mit Neutralleiter oder auch jede beliebige Phasenanzahl möglich, indem entsprechend viele Phasenmodule im modularen Multilevel-Stromrichter 11 vorgesehen werden.

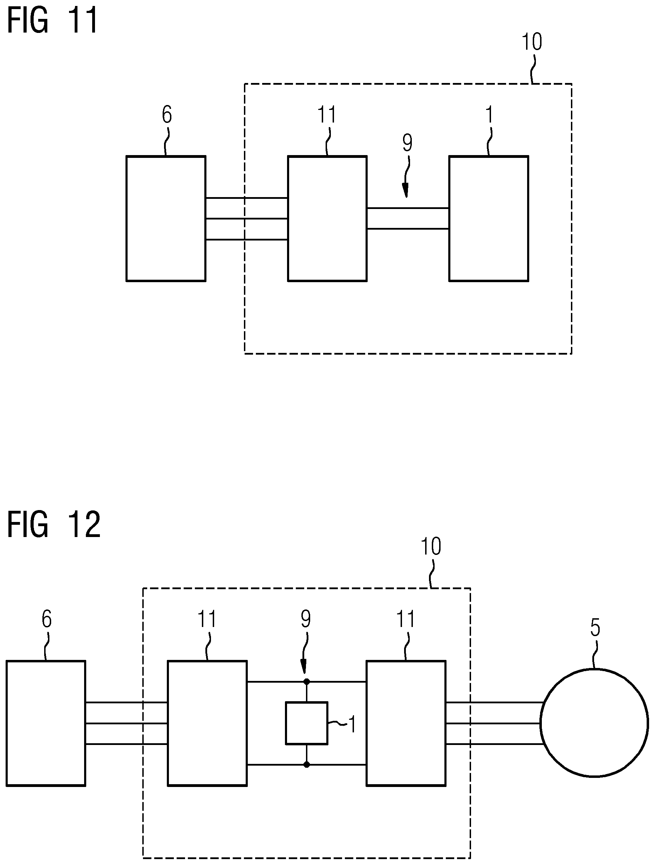

In der FIG 11 ist ein Ausführungsbeispiel einer modularen Antriebseinheit 10 dargestellt. Dabei ist der modulare Multilevel-Stromrichters 11 wechselspannungsseitig mit einem Energieversorgungsnetz 6 verbunden. Alternativ kann er mit einer beliebigen Energiequelle oder Energiespeicher verbunden sein.

Im Ausführungsbeispiel der FIG 12 weist die modulare Antriebseinheit 10 zwei modulare Multilevel-Stromrichter 11 und einen modularen Bremssteller 1 auf, die am Zwischenkreis 9 miteinander elektrisch verbunden sind. Dabei ist ein erster der zwei modularen Multilevel-Stromrichter 11 an seiner Wechselspannungsseite mit einem Energieversorgungsnetz 6 und ein zweiter der zwei modularen Multilevel-Stromrichter 11 an seiner Wechselspannungsseite mit einer elektrischen Maschine 5 verbunden. Die elektrische Maschine 5 kann dabei aus dem Energieversorgungsnetz 6 mit elektrischer Energie versorgt, d.h. gespeist, werden. Auch eine Rückspeisung von Energie von der elektrischen Maschine 5 in das Energieversorgungsnetz 6, beispielsweise bei einem Bremsvorgang, ist mit der modularen Antriebseinheit 10 möglich. Falls das Energieversorgungsnetz 6 nicht aufnahmefähig ist, kann die durch die elektrische Maschine 5 gewonnene elektrische Energie mittels des modularen Bremsstellers 1 in vorteilhafter Weise verschleißfrei in Wärme umgewandelt werden. Auf eine verschleißbehaftete mechanische Bremse kann in dieser Ausgestaltung verzichtet werden.

Bezugszeichenliste

1    Modularer Bremssteller
2    Submodul
3    Bremswiderstand
4    Steuervorrichtung
5    elektrische Maschine
6    Energieversorgungsnetz

8    Induktivität
9    Zwischenkreis

10    Modulare Antriebseinheit
11    Multilevel-Stromrichter
13    Anschlüsse des Bremsstellers (1)
14    Reihenschaltung
15    weitere Reihenschaltung
16    Ansteuerbaugruppe

31    Teilwiderstand
32    Schalter
33    Halbleiter
34    weiterer Schalter
35    Stromzweig

$R_B$    Widerstandswert des Bremswiderstands (3)
$R_i$    Widerstandswert des Teilwiderstands (31)
$P_{BS}$    in Wärme umzusetzende Leistung
$u_{BR}$    Spannung über den Submodulen (2)
$U_D$    Zwischenkreisspannung
$i_{BR}$    Strom durch den modularen Bremssteller (1)
$U_{C,sub}$    Kondensatorspannung in einem Submodul
$U_{sub}$    Ausgangsspannung eines Submoduls

**Patentansprüche**

1.    Modularer Bremssteller (1), wobei der modulare Bremssteller (1) mindestens ein Submodul (2) und einen Bremswiderstand (3) umfasst, wobei das mindestens eine Submodul (2) und der Bremswiderstand (3) in einer Reihenschaltung (14) angeordnet sind, wobei der Widerstandswert ($R_B$) des Bremswiderstands (3) durch eine Steuervorrichtung (4) veränderbar ist.

2.    Modularer Bremssteller (1) nach Anspruch 1, wobei der modulare Bremssteller mindestens einen Schalter (32) aufweist, wobei der Bremswiderstand (3) durch mindestens zwei Teilwiderständen (31) gebildet wird, wobei der Schalter (31) derart angeordnet ist, dass mittels des Schalters (32) der Stromfluss durch einen der mindestens zwei Teilwiderstände (31) beeinflussbar ist.

3.    Modularer Bremssteller (1) nach Anspruch 2, wobei die mindestens zwei Teilwiderstände (31) jeweils in parallelen Stromzweigen (35) angeordnet sind, wobei zumindest in einem der parallelen Stromzweige (35) der Schalter (32) und einer der mindestens zwei Teilwiderstände (31) in einer weiteren Reihenschaltung (15) angeordnet sind.

4.    Modularer Bremssteller (1) nach einem der Ansprüche 2 oder 3, wobei jeder der Stromzweige (35) jeweils eine weitere Reihenschaltung (15) aus einem der mindestens zwei Teilwiderstände (31) und einem Schalter (32) aufweist.

5.    Modularer Bremssteller (1) nach einem der Ansprüche 2 bis 4, wobei der Schalter (32) durch einen Halbleiter (33), insbesondere durch einen IGBT mit anti-paralleler Diode, gebildet wird.

6.    Modularer Bremssteller (1) nach einem der Ansprüche 1 bis 5, wobei parallel zu dem Bremswiderstand ein weiterer Schalter (34) angeordnet ist.

7.    Modulare Antriebseinheit (10), aufweisend einen modularen Multilevel-Stromrichter (11) und einen modularen Bremssteller (1) nach einem der Ansprüche 1 bis 6, wobei der Multilevel-Stromrichter (11) gleichspannungsseitig mit dem modularen Bremssteller (1) verbunden ist.

8.    Modulare Antriebseinheit (10) nach Anspruch 7, wobei der Multilevel-Stromrichter (11) wechselspannungsseitig mit einer elektrischen Maschine (5) verbunden ist, wobei die Steuervorrichtung (4) eingerichtet ist, elektrische Energie aus einem Bremsvorgang der elektrischen Maschine (5) zumindest teilweise durch den modularen Bremssteller (1) in Wärme umzusetzen.

9.    Modulare Antriebseinheit (10) nach Anspruch 7, wobei der Multilevel-Stromrichter (11) wechselspannungsseitig mit einem Energieversorgungsnetz (6) verbunden ist, wobei die Steuervorrichtung (4) eingerichtet ist, insbesondere zur Verbesserung der Stabilität des Energieversorgungsnetz (6) elektrische Energie in Wärme umzusetzen.

10.    Verfahren zum Betreiben eines modularen Bremsstellers (1) nach einem der Ansprüche 1 bis 6 oder einer modularen Antriebseinheit (10) nach einem der Ansprüche 7 bis 9, wobei in Abhängigkeit von der in Wärme umzusetzenden Leistung ($P_{BS}$) die Steuervorrichtung (4) den Widerstandswert ($R_B$) des modularen Bremsstellers (1) verändert.

11.    Verfahren nach Anspruch 10, wobei mit zunehmender in Wärme umzusetzender Leistung ($P_{BS}$) der Widerstandswert ($R_B$) verringert wird.

12.    Verfahren nach einem der Ansprüche 10 oder 11, wobei die Submodule (2) jeweils mindestens einen Kondensator (21) aufweisen, wobei der Widerstandswert ($R_B$) derart verändert wird, dass ein vorgegebener Grenzwert für eine Spannungsschwankung der Spannung (Uc) des jeweiligen Kondensators (21) der Submodule (2) unterschritten wird.

13. Verfahren nach einem der Ansprüche 10 bis 12, wobei im Leerlauf des modularen Bremsstellers (1) der Widerstandswert ($R_B$) des Bremsstellers auf einen Wert $R_B < 1\,\Omega$, insbesondere auf einen Wert $R_B < 0,1\,\Omega$ verändert wird.

# FIG 1

## FIG 2

## FIG 3

FIG 4

$U_{C,sub}$

$U_{sub}$

2

FIG 5

4

35

32

35

32

35

32

15

34

31

31

31

3

FIG 6

32, 34 =

33

33

33

...

## FIG 7

## FIG 8

## FIG 9

FIG 10

FIG 11

FIG 12

**Europäisches Patentamt**
**European Patent Office**
**Office européen des brevets**

# EUROPÄISCHER RECHERCHENBERICHT

Nummer der Anmeldung

EP 24 15 8843

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2022/254608 A1 (MITSUBISHI ELECTRIC CORP [JP]) 8. Dezember 2022 (2022-12-08) * Absatz [0022] - Absatz [0024]; Abbildung 1 * | 1-13 | INV.<br>H02M7/483<br>H02M1/32<br>H02M1/00<br>H02M7/757 |
| Y | LI ZHENGXUAN ET AL: "Energy Diverting Converter Topology Using Unidirectional Current H-Bridge Submodules for VSC-HVDC Transmission System", IEEE TRANSACTIONS ON POWER ELECTRONICS, INSTITUTE OF ELECTRICAL AND ELECTRONICS ENGINEERS, USA, Bd. 37, Nr. 5, 9. Dezember 2021 (2021-12-09), Seiten 5299-5308, XP011898442, ISSN: 0885-8993, DOI: 10.1109/TPEL.2021.3133498 [gefunden am 2022-01-19] * Abbildungen 1(c), 10 * | 1-13 | H02H9/04<br>H02P3/22 |

RECHERCHIERTE SACHGEBIETE (IPC)

H02M
H02P
H02H

Der vorliegende Recherchenbericht wurde für alle Patentansprüche erstellt

| Recherchenort | Abschlußdatum der Recherche | Prüfer |
|---|---|---|
| Den Haag | 23. Juli 2024 | Zeljkovic, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 8843

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2024

| Im Recherchenbericht angeführtes Patentdokument | Datum der Veröffentlichung | Mitglied(er) der Patentfamilie | Datum der Veröffentlichung |
|---|---|---|---|
| WO 2022254608 A1 | 08-12-2022 | DE 112021007742 T5 | 18-04-2024 |
| | | JP 7321404 B2 | 04-08-2023 |
| | | JP WO2022254608 A1 | 08-12-2022 |
| | | US 2024204647 A1 | 20-06-2024 |
| | | WO 2022254608 A1 | 08-12-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1
- WO 2007023061 A2